**Europäisches Patentamt**

**European Patent Office**

**Office européen des brevets**

(11) Veröffentlichungsnummer: **0 228 571**
**A2**

(12) # EUROPÄISCHE PATENTANMELDUNG

(21) Anmeldenummer: **86116457.2**

(22) Anmeldetag: **27.11.86**

(51) Int. Cl.⁴: **G 11 B 15/665**
**G 11 B 15/61**

(30) Priorität: **20.12.85 DE 3545218**

(43) Veröffentlichungstag der Anmeldung:
**15.07.87 Patentblatt 87/29**

(84) Benannte Vertragsstaaten:
**DE FR GB IT**

(71) Anmelder: **GRUNDIG E.M.V. Elektro-Mechanische Versuchsanstalt Max Grundig holländ. Stiftung & Co. KG.**
**Kurgartenstrasse 37**
**D-8510 Fürth(DE)**

(72) Erfinder: **Kutrowatz, Johann**
**Kurgartenstrasse 37**
**D-8510 Fürth/Bay.(DE)**

(54) **Video-Magnetbandgerät.**

(57) Beschrieben ist ein Video-Magnetbandgerät mit einer Einrichtung zur Halterung eines beweglichen Bandführungselementes, wobei dem Bandführungselement ein Gleitteil und ein Druckkörper zugeordnet ist. Das Bandführungselement ist über den Druckkörper in der Geräte-Endstellung durch ein bewegliches Druckteil in ein dem Chassis zugeordnetes gabelförmiges Prismenlager derart einschiebbar, daß eine vorgegebene Winkel- und Höhenlage zur Kopftrommel mit hoher Wiederholungsgenauigkeit gewährleistet ist.

Croydon Printing Company Ltd.

3. 1

# VIDEO-MAGNETBANDGERÄT

## BESCHREIBUNG

Die Erfindung bezieht sich auf ein Video-Magnetbandgerät gemäß dem Oberbegriff des Anspruchs 1.

Bei Video-Magnetbandgeräten, die nach dem sogenannten
Schrägspurverfahren arbeiten, ist bekannt, daß das
Magnetband aus einer Kassette herausgezogen und
wenigstens teilweise um eine rotierende Kopftrommel
geführt wird. Zum Herausziehen des Magnetbandes aus
der Kassette sind Bandführungselemente in Form von
Bandführungsrollen bzw. Bandführungsstifte vorgesehen.
Die Bandführungselemente sind z. B. auf einem ringförmigen Träger oder einem Schwenkhebel angeordnet.
Der ringförmige Träger ist um die Kopftrommel gelegt
und getrennt antreibbar. Da das Magnetband in Form einer Schlaufe um die Kopftrommel gezogen wird, sind mehrere Bandführungselemente erforderlich, damit vermieden wird, daß das Magnetband im Schlaufenbereich und im übrigen Führungsbereich übereinander zu liegen kommt. Die verschiedenen Bandführungselemente nehmen daher während des Bandauszugvorganges im Bereich der Kopftrommel zwischen der Ausgangslage und der Endlage (das Magnetband ist um die Kopftrommel teilweise geführt) verschiedene Abstandspositionen und Winkellagen zueinander und zur Kopftrommel ein. Die genauen Endlagen der Bandführungselemente werden durch geräteeigene Anschläge bestimmt. Ebenso ist bekannt, daß die Anschläge der Bandführungselemente zur Sicherstellung der erforderlichen Winkelstellung der Bandführungen zur Kopftrommel als Prismenlager ausgebildet sind, an die die Bandführungselemente angedrückt werden. Nachteilig ist hierbei jedoch, daß in der Endstellung der Bandführungselemente zwar die Winkellage zur Bandtrommel vorgegeben wird, nicht jedoch die exakte Höhenlage.

Aufgabe der Erfindung ist es daher, eine Einrichtung zur Halterung eines beweglichen Bandführungselementes für seine Geräte-Endlage zu schaffen, durch die das Bandführungselement nicht nur in seiner Winkelstellung sondern auch in seiner Höhenlage zur Kopftrommel eindeutig fixiert ist.

Diese Aufgabe wird erfindungsgemäß durch die im Kennzeichen des Patentanspruchs 1 angegebenen Merkmale gelöst.

Die Erfindung wird nachfolgend anhand der Zeichnungen erläutert.

Fig. 1    ist eine vereinfachte Draufsicht auf ein Laufwerk eines Video-Magnetbandgerätes, wobei das Magnetband sich noch in der Bandkassette befindet,

Fig. 2    ist eine vereinfachte Draufsicht auf ein Laufwerk eines Video-Magnetbandgerätes ähnlich Fig. 1, jedoch mit aus der Kassette herausgezogenem Magnetband und einer Einrichtung zur Halterung eines Bandführungselementes in seiner Endstellung gemäß der Erfindung,

Fig. 3    ist eine vergrößerte Seitenansicht einer Einrichtung zur Halterung eines Bandführungselementes in einem Prismenlager in seiner Endstellung.

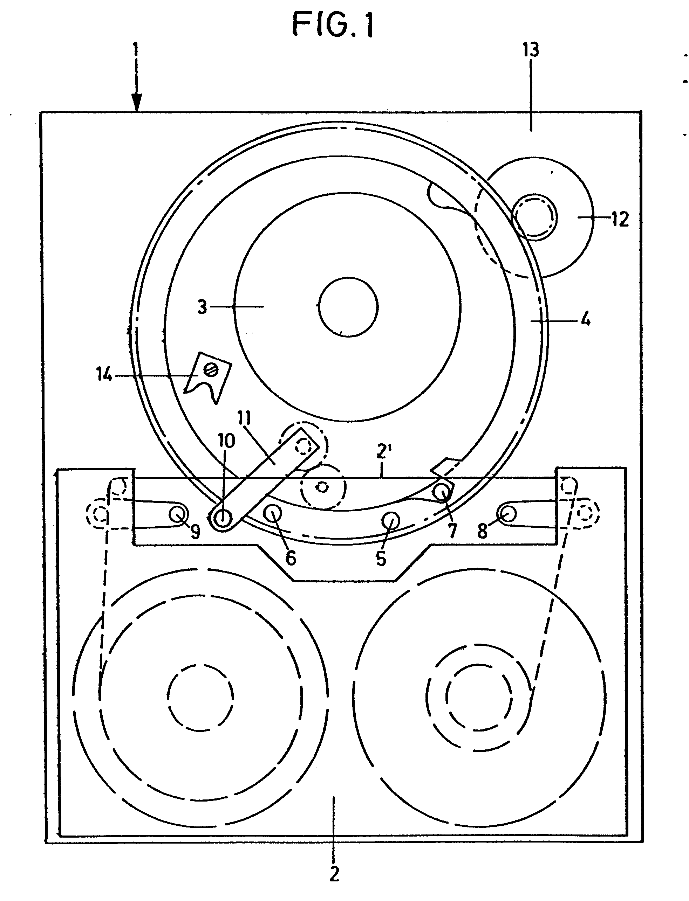

Figur 1 zeigt in vereinfachter Darstellung einen Teil des Laufwerkes eines Video-Magnetbandgerätes 1, mit einer eingelegten Magnetbandkassette 2, mit einer

Kopftrommel 3 und zugeordneter Steuerscheibe 4 sowie verschiedene Bandführungselemente 5 bis 10. Die Bandführungselemente 5, 6, 7 sind auf der in zwei Ringen geteilten Steuerscheibe 4 angeordnet, die Bandführungen 8 und 9 je auf einem Hebel, und das Bandführungselement 10 ist auf einem Schwenkhebel 11 aufgesetzt. Die Steuerscheibe 4 wird durch einen Antriebsmotor 12 angetrieben. Ferner kommt die Steuerscheibe in Eingriff zu einem in der Zeichnung nicht näher dargestellten Getriebe, das bedarfsweise den Schwenkhebel 11 ansteuert. Alle Teile sind auf einem nur andeutungsweise gezeichnetem Chassis 13 montiert. Auf dem Chassis befindet sich ebenfalls ein im Bereich des Schwenkhebels 11 liegender Endanschlag für das Bandführungselement 10 in Form eines gabelartig ausgeführten Prismenlagers 14.

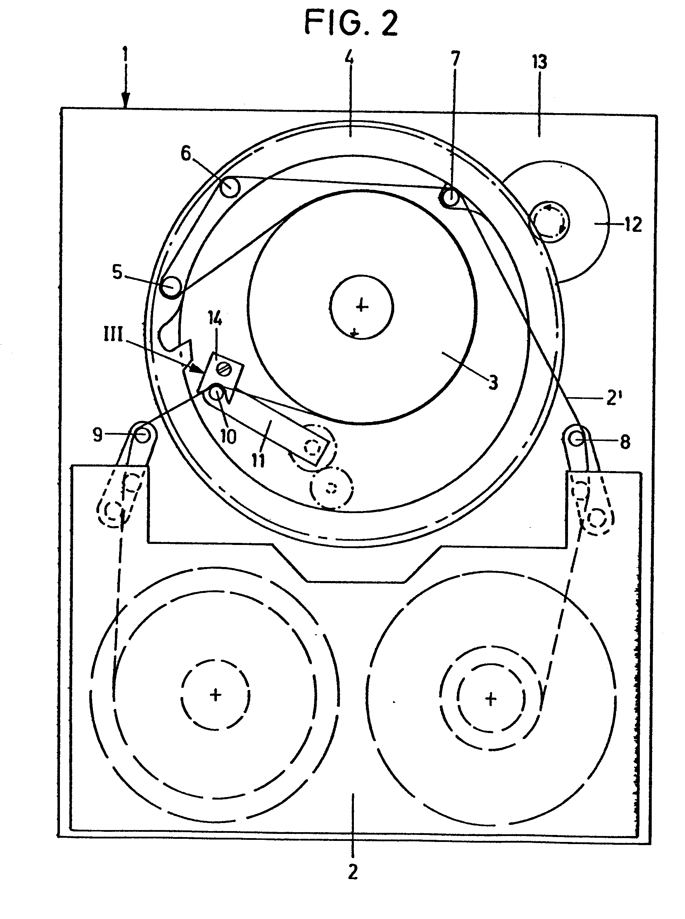

Aus der Figur 2 ist ersichtlich, welche Endlage die Bandführungselemente 5 bis 10 einnehmen, sobald das Magnetband 2' aus der Kassette 2 herausgezogen und um die Kopftrommel 3 gelegt ist. Das Bandführungselement 10 liegt in der Endlage am Prismenlager 14 an.

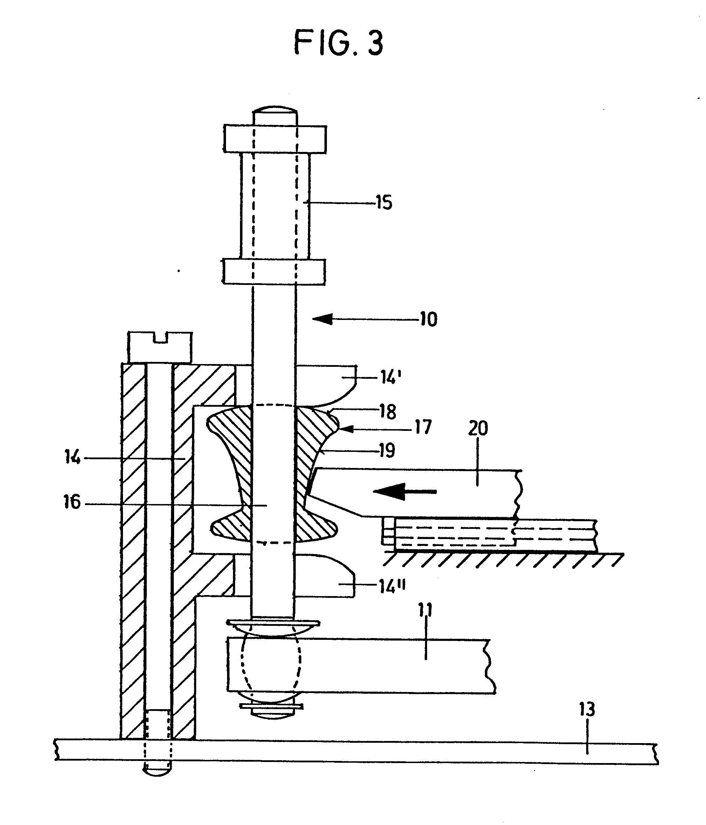

Die Figur 3 zeigt das Bandführungselement 10 in der Geräteendlage in vergrößerter Darstellung und gesehen aus der in Figur 2 angegebenen Pfeilrichtung III. Das Bandführungselement 10 besteht aus einem oberen Bandführungsteil 15 und einem unteren Gleitteil 16. Das Gleitteil ist als Stift ausgeführt und leicht beweglich auf dem Schwenkhebel 11 gelagert. Über den Hebel 11 ist die Bandführung schwenkbar mit dem Chassis 13 verbunden. Die genaue Winkellage des Bandführungselementes 10 zur Kopftrommel bestimmt das Prismenlager 14. Das Prismenlager ist gabelartig ausgeführt, und zwischen den Gabelteilen 14' und 14'' liegt ein auf dem Gleitteil 16 der Bandführung 10 aufgesteckter Druckkörper 17. Der Druckkörper weist wenigstens an einer Stirnseite eine kalottenförmige Anlagefläche 18 und im Mantelbereich eine umlaufende Einschnürung 19 auf. Über ein geräteseitig, z. B. von der Steuerscheibe 4 zu betätigendes Druckteil 20 wird nach Anliegen des Bandführungselementes 10 an das Prismenlager 14 ein Druck auf den Druckkörper 17 ausgeübt. Hierdurch wird einerseits das Gleitteil an das Prismenlager und andererseits der Druckkörper an das obere Gabelteil 14' des Prismenlagers 14 angedrückt. Hiermit ist sowohl die Winkellage als auch die exakte Höhenlage zur Kopftrommel gewährleistet. Beim Zurückführen des Schwenkhebels 11 in die Ausgangslage wird zuerst das Druckteil 20 zurückgenommen und das Bandführungselement kann dann mit geringen Steuerkräften in die Ausgangslage gebracht werden.

1

VIDEO-MAGNETBANDGERÄT

PATENTANSPRÜCHE

1. Video-Magnetbandgerät mit einer Einrichtung zur Halterung eines beweglichen Bandführungselements in seiner Endstellung, wobei das Videogerät eine drehbare Kopftrommel mit zugeordneten Videoköpfen aufweist, und das Magnetband mittels Bandführungselemente aus einer Kassette herausgezogen in Schrägspurführung teilweise um die Kopftrommel gelegt wird, und daß die Bandführungselemente durch Steuerelemente in eine Endlage gebracht werden, d a d u r c h g e k e n n z e i c h n e t, daß wenigstens ein Bandführungselement (10) aus einem oberen Bandführungsteil (15) und einem unteren Gleitteil (16) besteht, daß das Gleitteil (16) als Stift ausgeführt und beweglich dem Steuerelement zugeordnet ist, daß auf den Stift ein Druckkörper (17) aufgesetzt ist, und daß in der Betriebsendlage das Bandführungs-

element (10) über das Gleitteil (16) an ein gabelartig ausgeführtes Prismenlager (14) anliegt und durch ein Druckteil
(20), das auf den Druckkörper einwirkt, an das Prismenlager
und gleichzeitig an ein dem oberen Gabelteil (14) des
Prismenlagers zugeordnetes Höhenlager angedrückt wird.

2. Video-Magnetbandgerät nach Anspruch 1, d a d u r c h
g e k e n n z e i c h n e t, daß das Steuerelement als
Schwenkhebel (11) ausgebildet ist.

3. Video-Magnetbandgerät nach den Ansprüchen 1 und 2,
d a d u r c h   g e k e n n z e i c h n e t, daß das Druckteil (20) als Führungsschieber oder als Hebel ausgebildet ist.

4. Video-Magnetbandgerät nach den Ansprüchen 1 bis 3,
d a d u r c h   g e k e n n z e i c h n e t, daß der Druckkörper (17) wenigstens an einer Stirnseite eine kalottenförmige Anlagefläche (18) und im Mantelbereich eine umlaufende Einschnürung (19) aufweist.

5. Video-Magnetbandgerät nach den Ansprüchen 1 bis 4,
d a d u r c h   g e k e n n z e i c h n e t, daß das obere
Bandführungsteil (15) des Bandführungselements (10) als
Führungsstift oder als Führungsrolle ausgebildet ist.

Reg. 2037.

0228571

# FIG.1

FIG. 2

Reg. 2035 0228571

## FIG. 3